# EUROPÄISCHE PATENTSCHRIFT

(11) **EP 4 359 270 B1**
(45) Veröffentlichungstag und Bekanntmachung des Hinweises auf die Patenterteilung: **28.01.2026**
(21) Anmeldenummer: 22734105.4
(22) Anmeldetag: 02.06.2022
(51) Int. Cl.: B60T 7/04, B60T 8/172, B60T 8/88

(54) **BREMSSYSTEM FÜR EIN KRAFTFAHRZEUG**
BRAKE SYSTEM FOR A VEHICLE
SYSTÈME DE FREINAGE POUR UN VÉHICULE

(30) Priorität: 23.06.2021 DE 102021206497
(43) Veröffentlichungstag der Anmeldung: 01.05.2024
(73) Patentinhaber: AUMOVIO Germany GmbH, 60488 Frankfurt am Main (DE)
(72) Erfinder: ULLRICH, Thorsten, 60488 Frankfurt am Main (DE); BACHMANN, Robert, 60488 Frankfurt am Main (DE); BAECHLE, Martin, 60488 Frankfurt am Main (DE); BÜCHLER, Roman, 60488 Frankfurt am Main (DE)
(74) Vertreter: Aumovio Corporation
(86) Internationale Anmeldenummer: PCT/DE2022/200106
(87) Internationale Veröffentlichungsnummer: WO 2022/268267

(56) Entgegenhaltungen:
- WO-A1-2010/034676
- WO-A1-2020/207871
- DE-A1- 102015 206 572
- DE-B3- 10 319 194

## Beschreibung

Die Erfindung betrifft ein Bremssystem für ein Kraftfahrzeug.

Im Stand der Technik sind Bremssysteme mit einem elektrohydraulischen Teilbremssystem und einem elektromechanischen Teilbremssystem bekannt. Dabei werden üblicherweise beide Systeme von einer Steuereinheit gesteuert, wobei die Steuereinheit üblicherweise dem elektrohydraulischen Teilbremssystem zugeordnet ist. Das elektrohydraulische Teilbremssystem weist dabei üblicherweise eine hydraulische Rückfallebene auf, die eine Verzögerung des Fahrzeugs auch bei einem Ausfall der Steuereinheit durch das hydraulische Teilbremssystem ermöglicht.

Das Dokument DE 103 19 194 B3 beschreibt eine derartige kombinierte hydraulische und elektromechanische Fahrzeugbremsanlage mit einer hydraulischen Betriebsbremsanlage für Vorderräder und einer elektromechanischen Betriebsbremsanlage für Hinterräder, insbesondere eines Personenkraftwagens. Das Dokument schlägt vor, jede hydraulische Radbremse an zwei Bremsdruckaufbauventile und an zwei Bremsdruckabsenkventile anzuschließen. Hierdurch soll eine erhöhte Radbremsdruckaufbau- und -absenkgeschwindigkeit erreicht werden.

Ferner beschreibt das Dokument DE 10 2015 206 572 A1 eine weitere Bremsanlage für Kraftfahrzeuge, die in einer "Brake-by-wire"-Betriebsart sowohl von einem Fahrer als auch unabhängig vom Fahrer ansteuerbar ist. Die Bremsanlage weist eine erste elektrisch steuerbare Druckquelle mit einer ersten elektronischen Steuereinheit auf, mittels welcher die Radbremsen betätigbar sind, sowie eine zweite elektrisch steuerbare Druckquelle mit einer zweiten elektronischen Steuereinheit, mittels welcher die Radbremsen betätigbar sind. Hierdurch soll eine Bremsanlage bereitgestellt werden, welche für automatisiertes Fahren geeignet ist und insbesondere die hierfür erforderlichen Sicherheitsanforderungen bezüglich der Verfügbarkeit der Bremsfunktion gewährleistet, auch bei einem Auftreten eines Fehlers.

Es gibt in einem solchen System eine hohe Anzahl von möglichen Fehlern, die zu einem Verlust der kompletten elektrischen Verstärkung der Bremswirkung führen. Dies gilt sowohl für das elektrohydraulische als auch für das elektromechanische Teilbremssystem.

Demgegenüber liegt der vorliegenden Anmeldung die Aufgabe zugrunde ein Bremssystem anzugeben, das eine Reduktion der Fehlerwahrscheinlichkeit für einen kompletten Verlust der elektrischen Verstärkung der Bremswirkung durch einen elektrischen Fehler, sowie eine hohe Bremsperformance bei elektrischen Einzelfehlern bereitstellt.

Diese Aufgabe wird mit dem Bremssystem nach Anspruch 1 gelöst.

Die Erfindung betrifft ein Bremssystem für ein Kraftfahrzeug mit einem elektrohydraulischen Teilbremssystem mit hydraulisch betätigten Radbremsen und einem elektromechanischen Teilbremssystem mit elektromechanisch betätigten Radbremsen. Das Bremssystem weist dabei zwei Steuereinheiten und zwei voneinander unabhängige Energieversorgungen auf, wobei eine erste der Steuereinheiten zur Steuerung des elektromechanischen Teilbremssystems ausgebildet ist und eine zweite der Steuereinheiten zur Steuerung des elektrohydraulischen Teilbremssystems ausgebildet ist. Die erste Steuereinheit wird ausschließlich durch eine erste der Energieversorgungen mit Energie versorgt und die zweite Steuereinheit wird ausschließlich durch eine zweite der Energieversorgungen mit Energie versorgt. Dabei ist die erste Steuereinheit über einen primären Kommunikationsbus mit den elektromechanisch betätigten Radbremsen verbunden und die zweite Steuereinheit ist über einen sekundären Kommunikationsbus mit den elektromechanisch betätigten Radbremsen verbunden, wobei die erste Steuereinheit dazu ausgebildet ist, Steuerinformationen, insbesondere durch die elektromechanischen Radbremsen aufzubringende Soll-Bremskräfte, über den primären Kommunikationsbus an die elektromechanisch betätigten Radbremsen zu übermitteln, wobei die zweite Steuereinheit dazu ausgebildet ist, über den sekundären Kommunikationsbus Betätigungsinformationen des elektrohydraulischen Teilbremssystems, insbesondere einen Pedalweg oder Pedalwinkel eines Betätigungspedals und/oder eine auf das Betätigungspedal wirkende Kraft und/oder einen Verschiebeweg eines in dem Hauptzylinder angeordneten Zylinderkolbens, an die elektromechanisch betätigten Radbremsen zu übermitteln. Die elektromechanischen Radbremsen weisen jeweils Radsteuereinheiten auf, wobei die Radsteuereinheiten dazu ausgebildet sind, eine durch die jeweilige elektromechanische Radbremse aufgebrachte Bremskraft in Abhängigkeit einer über den primären und/oder sekundären Kommunikationsbus empfangenen Information, insbesondere einer Steuerinformation oder einer Betätigungsinformation, zu steuern.

Die Steuereinheit des Bremssystems ist demnach in eine erste Steuereinheit und eine zweite Steuereinheit aufgeteilt. Die erste Steuereinheit und die zweite Steuereinheit kontrollieren dabei bevorzugt jeweils einen Teil des elektrohydraulischen Teilbremssystems. Ferner kommunizieren bevorzugt die erste Steuereinheit und die zweite Steuereinheit über einen separaten Bus mit dem elektromechanischen Teilbremssystem. Besonders bevorzugt ist dabei die erste Steuereinheit dazu ausgebildet, Informationen, mit der zweiten Steuereinheit auszutauschen. Dabei kann es sich insbesondere um Betätigungsinformationen, anliegende Bremsdrücke oder Bremskräfte oder weitere Betriebsinformationen des jeweiligen Teilbremssystems handeln.

So kann bei elektrischen Einzelfehlern eine hohe Bremsperformance gewährleistet werden, da auch bei einem Ausfall einer der Steuereinheiten das elektrohydraulische und das elektromechanische Teilbremssystems jeweils durch die noch funktionsfähige Steuereinheit in einer Art und Weise angesteuert werden kann, die die Bereitstellung einer Mindestverzögerung durch das Bremssystem garantiert. Unter einem "Einzelfehler" ist dabei eine Fehlfunktion eines Elements des Bremssystems, also beispielsweise einer Energieversorgung oder einer Steuereinheit zu verstehen.

Das hydraulische Teilbremssystem weist dabei bevorzugt genau zwei hydraulisch betätigte Radbremsen auf, wobei die hydraulisch betätigten Radbremsen besonders bevorzugt dazu ausgebildet sind, die Räder einer Vorderachse des Kraftfahrzeugs mit einer Bremskraft zu beaufschlagen.

Entsprechend weist bevorzugt das elektromechanische Teilbremssystem genau zwei elektromechanisch betätigte Radbremsen auf, wobei besonders bevorzugt die elektromechanisch betätigten Radbremsen dazu ausgebildet sind, die den elektromechanisch betätigten Radbremsen zugeordneten Fahrzeugräder des Fahrzeugs, insbesondere die Fahrzeugräder einer Hinterachse des Kraftfahrzeugs, mit einer Bremskraft in Abhängigkeit einer empfangenen Information, insbesondere einer Steuerinformation, insbesondere einer Soll-Bremskraft, zu beaufschlagen.

Bevorzugt ist demnach das Bremssystem mit einer achsweisen Verteilung der elektromechanischen und elektrohydraulischen Radbremsen ausgelegt, wobei üblicherweise eine Hauptlast der Verzögerung durch die elektrohydraulisch betätigten Radbremsen der Vorderachse getragen wird.

Bei den elektromechanisch betätigten Radbremsen kann es sich beispielsweise um Scheibenbremsen oder bevorzugt um elektromechanische Trommelbremsen handeln. Bevorzugt sind dabei die elektromechanisch betätigten Radbremsen ferner dazu ausgebildet, eine Parkbremsfunktion umzusetzen. Besonders bevorzugt ist dabei die erste Steuereinheit dazu ausgebildet, die Parkbremsfunktion der elektromechanisch betätigten Radbremsen zu aktivieren.

Nach einer bevorzugten Ausführungsform ist vorgesehen, dass das elektrohydraulische Teilbremssystem eine elektromechanische Druckbereitstellungseinrichtung zur Erzeugung eines hydraulischen Bremsdrucks aufweist, wobei die zweite Steuereinheit dazu ausgebildet ist, die elektromechanische Druckbereitstellungseinrichtung zu Erzeugung eines hydraulischen Bremsdrucks durch die elektromechanische Druckbereitstellungseinrichtung anzusteuern. Bei der elektromechanischen Druckbereitstellungseinrichtung kann es sich beispielsweise um einen sogenannten Linearaktuator handeln. Dabei ist bevorzugt eine Antriebswelle eines elektromotorischen Antriebs mit einem Rotations-Translationsgetriebe so verbunden, dass eine Rotation der Antriebswelle in eine Translation eines Druckkolbens übersetzt wird. Der Druckkolben ist in einem Druckzylinder angeordnet und dazu ausgebildet, ein in dem Druckzylinder befindliches Fluid, insbesondere Bremsflüssigkeit, aus dem Druckzylinder zu verdrängen bzw. mit einem Druck zu beaufschlagen. In einer Normalbetriebsart des elektrohydraulischen Teilbremssystems wird dabei ein hydraulischer Druck zur Erzeugung einer Bremskraft durch die hydraulisch betätigten Radbremsen ausschließlich durch die elektromechanische Druckbereitstellungseinrichtung erzeugt.

Um eine Steuerung der Druckbereitstellungseinrichtung durch die zweite Steuereinheit zu gewährleisten ist dabei bevorzugt vorgesehen, dass die zweite Steuereinheit eine Leistungselektronik zur Bereitstellung einer Betriebsspannung für die elektromechanische Druckbereitstellungseinrichtung aufweist. Die Energieversorgung der Leistungselektronik und mithin der Druckbereitstellungseinrichtung wird dementsprechend ebenfalls durch die zweite Energieversorgung gewährleistet.

Nach einer weiteren Ausführungsform ist dabei vorgesehen, dass das elektrohydraulische Teilbremssystem ein Druckzufuhrventil aufweist, wobei das Druckzufuhrventil dazu ausgebildet ist, eine hydraulische Verbindung zwischen der elektromechanischen Druckbereitstellungseinrichtung und den hydraulisch betätigten Radbremsen herzustellen oder zu trennen. Bevorzugt ist dabei das Druckzufuhrventil stromlos geschlossen. Dementsprechend wäre bei einem Ausfall der Stromversorgung des Druckzufuhrventils eine hydraulische Verbindung zwischen der elektromechanischen Druckbereitstellungseinrichtung und den hydraulisch betätigten Radbremsen unterbrochen.

Nach einer weiteren Ausführungsform ist vorgesehen, dass das elektrohydraulische Teilbremssystem einen hydraulischen Hauptzylinder aufweist, wobei der Hauptzylinder durch ein Betätigungspedal mit einem hydraulischen Druck beaufschlagt werden kann, wobei das elektrohydraulische Teilbremssystem ein Hauptzylinderventil aufweist, wobei das Hauptzylinderventil dazu ausgebildet ist, eine hydraulische Verbindung zwischen dem Hauptzylinder und den hydraulisch betätigten Radbremsen herzustellen oder zu trennen. Bevorzugt ist das Hauptzylinderventil stromlos offen, sodass bei einem Ausfall der Energieversorgung des Hauptzylinderventils automatisch eine hydraulische Verbindung zwischen dem Hauptzylinder und den hydraulisch betätigten Radbremsen hergestellt wird. Auf diese Weise bleibt auch bei einem entsprechenden Einzelfehler weiterhin eine direkte Betätigung der hydraulisch betätigten Radbremsen durch das Betätigungspedal und den Hauptzylinder möglich.

Wie zuvor bereits ausgeführt wurde, ist in einem Normalbetrieb des Bremssystems vorgesehen, dass ein hydraulischer Druck zur Betätigung der elektrohydraulisch betätigten Radbremsen ausschließlich durch die elektromechanische Druckbereitstellungseinrichtung erzeugt wird. Dabei wird entsprechend bevorzugt der Hauptzylinder von der Radbremsen hydraulisch getrennt. Um dem Fahrzeugführer bei einer Betätigung des Betätigungspedals bzw. Bremspedals auch weiterhin ein gewohntes Betätigungsgefühl zu vermitteln, ist nach einer weiteren Ausführungsform vorgesehen, dass das elektrohydraulische Teilbremssystem einen Pedalgefühlsimulator aufweist, wobei der Pedalgefühlsimulator mit dem Hauptzylinder hydraulisch verbindbar ist, wobei das elektrohydraulische Teilbremssystem ein Simulatorventil aufweist, wobei das Simulatorventil dazu ausgebildet ist, eine hydraulische Verbindung zwischen dem Hauptzylinder und dem Pedalgefühlsimulator herzustellen oder zu trennen. Das Simulatorventil ist dabei bevorzugt stromlos geschlossen, sodass der Hauptzylinder bei einer Fehlfunktion von dem Pedalgefühlsimulator entkoppelt wird und der in dem Hauptzylinder erzeugte hydraulische Druck vollständig auf die Radbremsen einwirken kann.

Wie zuvor bereits ausgeführt wurde, ist bevorzugt vorgesehen, dass jede Steuereinheit jeweils einen Teil des elektrohydraulischen Teilbremssystems steuert, sodass bei einem Ausfall einer der Steuereinheiten oder einer zugeordneten Energieversorgung weiterhin eine Verzögerung durch das hydraulische Teilbremssystem möglich bleibt. Dementsprechend ist nach einer bevorzugten Ausführungsform vorgesehen, dass die zweite Steuereinheit dazu ausgebildet ist, die elektromechanische Druckbereitstellungseinrichtung, das Simulatorventil, das Hauptzylinderventil und das Druckzufuhrventil zu steuern.

Nach einer weiteren Ausführungsform ist ferner vorgesehen, dass das elektrohydraulische Teilbremssystem einen ersten Drucksensor zur Bestimmung eines durch den Hauptzylinder erzeugten hydraulischen Drucks und/oder einen Motorpositionssensor zur Bestimmung einer Motorlage eines Antriebs der elektromechanischen Druckbereitstellungseinrichtung und/oder einen Wegsensor zur Bestimmung eines Verschiebeweges eines Zylinderkolbens in dem Hauptzylinder aufweist. Die zweite Steuereinheit ist in diesem Fall bevorzugt dazu ausgebildet, durch den Drucksensor ermittelte Informationen und/oder durch den Motorpositionssensor ermittelte Informationen und/oder durch den Wegsensor ermittelte Informationen auszulesen. Diese Informationen können dann entweder in Form von Betätigungsinformationen an die elektromechanisch betätigten Radbremsen übermittelt werden, oder an die erste Steuereinheit kommuniziert werden.

Neben einer Übermittlung der so ermittelten Informationen an das elektromechanische Teilbremssystem ist nach einer weiteren Ausführungsform ferner vorgesehen, dass die zweite Steuereinheit dazu ausgebildet ist, die elektromechanische Druckbereitstellungseinrichtung zur Erzeugung eines hydraulischen Bremsdrucks durch die elektromechanische Druckbereitstellungseinrichtung in Abhängigkeit eines ermittelten Verschiebewegs des Zylinderkolbens in dem Hauptzylinder und/oder in Abhängigkeit eines durch den Hauptzylinder erzeugten hydraulischen Drucks und/oder in Abhängigkeit eines Betätigungswinkels des Betätigungspedals und/oder in Abhängigkeit eines Betätigungswegs des Betätigungspedals und/oder in Abhängigkeit einer auf das Betätigungspedal wirkenden Kraft anzusteuern. Dabei können auch ein Betätigungswinkel oder ein Betätigungsweg des Betätigungspedals oder eine auf das Betätigungspedal einwirkende Kraft als Betätigungsinformation zur Steuerung der elektromechanischen Radbremsen verwendet werden.

Zur radindividuellen Anpassung eines an den hydraulisch betätigten Radbremsen anliegenden Bremsdrucks, beispielsweise zur Umsetzung einer ABS-Funktion, ist nach einer weiteren Ausführungsform vorgesehen, dass das elektrohydraulische Teilbremssystem eine Druckmodulationsvorrichtung aufweist, wobei die Druckmodulationsvorrichtung dazu ausgebildet ist, den an den hydraulisch betätigten Radbremsen anliegenden hydraulischen Bremsdruck insbesondere radindividuell zu modulieren, wobei die erste Steuereinheit dazu ausgebildet ist, die Druckmodulationsvorrichtung zu steuern.

Besonders bevorzugt ist dabei vorgesehen, dass das elektrohydraulische Teilbremssystem je hydraulisch betätigter Radbremse ein bevorzugt stromlos offenes Einlassventil und ein bevorzugt stromlos geschlossenes Auslassventil aufweist, wobei die Einlassventile und Auslassventile die Druckmodulationsvorrichtung bilden. Die Einlassventile sind dabei bevorzugt jeweils dazu ausgebildet, eine hydraulische Verbindung zwischen der jeweiligen Radbremse und der elektromechanischen Druckbereitstellung und/oder dem Hauptzylinder herzustellen oder zu trennen, während die Auslassventile jeweils dazu ausgebildet sind, eine hydraulische Verbindung zwischen der jeweiligen Radbremse und einem Bremsflüssigkeitsreservoir herzustellen oder zu trennen. Bevorzugt steht dabei das Bremsflüssigkeitsreservoir unter Atmosphärendruck. Die erste Steuereinheit ist entsprechend bevorzugt dazu ausgebildet, die Einlassventile und/oder die Auslassventile des elektrohydraulischen Teilbremssystems zu steuern.

Nach einer weiteren Ausführungsform ist ferner vorgesehen, dass die elektromechanisch betätigten Radbremsen von der ersten Energieversorgung mit Energie versorgt werden. Die elektromechanischen Radbremsen werden nach dieser Ausführungsform also von derselben Energieversorgung mit Energie versorgt, die auch die den elektromechanischen Radbremsen primär zugeordnete Steuereinheit mit Energie versorgt.

Zuvor wurde bereits ausgeführt, dass die elektromechanischen Radbremsen auf Grundlage von Steuerinformationen angesteuert werden, die insbesondere eine durch die jeweilige Radbremse aufzubringende Radbremse Soll-Bremskraft identifizieren. Hierzu ist nach einer weiteren Ausführungsform vorgesehen, dass die erste Steuereinheit dazu ausgebildet ist, in Abhängigkeit eines ermittelten Verschiebewegs des Zylinderkolbens in dem Hauptzylinder und/oder in Abhängigkeit eines durch den Hauptzylinder erzeugten hydraulischen Drucks und/oder in Abhängigkeit eines Betätigungswinkels des Betätigungspedals und/oder in Abhängigkeit eines Betätigungswegs des Betätigungspedals und/oder in Abhängigkeit einer auf das Betätigungspedal wirkenden Kraft durch die elektromechanisch betätigten Radbremsen aufzubringende Soll-Bremskräfte zu ermitteln.

Nach einer weiteren Ausführungsform ist ferner vorgesehen, dass Bremssystem nach einem der vorherigen Ansprüche, wobei das Bremssystem Raddrehzahlsensoren aufweist, wobei die erste Steuereinheit dazu ausgebildet ist, auf Grundlage der Raddrehzahlen die an den Fahrzeugrädern anliegenden Bremskräfte zu modulieren. Insbesondere kann dabei vorgesehen sein, dass durch die Modulation der an den Fahrzeugrädern anliegenden Bremskräfte, insbesondere durch eine entsprechende Änderung der Zuspannkraft der elektromechanisch betätigten Radbremsen bzw. des hydraulischen Drucks in den hydraulisch betätigten Radbremsen, eine Fahrfunktion, insbesondere eine ABS-Funktion oder eine ESC-Funktion realisiert wird.

Dabei ist bevorzugt vorgesehen, dass das elektrohydraulische Teilbremssystem einen Vordrucksensor zur Bestimmung eines vor den Einlassventilen der Radbremsen anliegenden hydraulischen Drucks aufweist, wobei die erste Steuereinheit dazu ausgebildet ist, durch den Vordrucksensor ermittelte Informationen auszulesen. Ausgehend eine einem solchen Vordruck kann dann durch gezieltes Öffnen und Schließen der Einlass- und Auslassventile das Verzögerungsverhalten der hydraulisch betätigten Radbremsen zur Umsetzung einer ABS- oder ESC-Funktion gesteuert werden.

Neben einer Aktivierung des Bremssystems durch eine Betätigung des Bremspedals bzw. Betätigungspedals kann ferner vorgesehen sein, dass das Bremssystem autonom durch eine Fahrfunktion des Fahrzeugs aktiviert wird, ohne dass ein Fahrzeugführer hierauf aktiv Einfluss hat. Hierzu ist nach einer weiteren Ausführungsform vorgesehen, dass die erste Steuereinheit mit einem Fahrzeugbus des Kraftfahrzeugs verbunden ist, wobei über den Fahrzeugbus Steuerbefehle, insbesondere Bremsanforderungen, an die erste Steuereinheit übermittelt werden können. Derartige Bremsanforderungen können beispielsweise im Rahmen einer Active Cruise Control oder einer ESC-Funktion ausgelöst werden.

Im Folgenden werden bevorzugte Ausgestaltungen der Erfindung anhand der Zeichnungen näher erläutert. Dabei zeigen
- Figur 1: eine schematische Darstellung eines beispielhaften Bremssystems und
- Figur 2: eine vereinfachte Darstellung des beispielhaften Bremssystems.

Im Folgenden werden einander ähnliche oder identische Merkmale mit denselben Bezugszeichen gekennzeichnet.

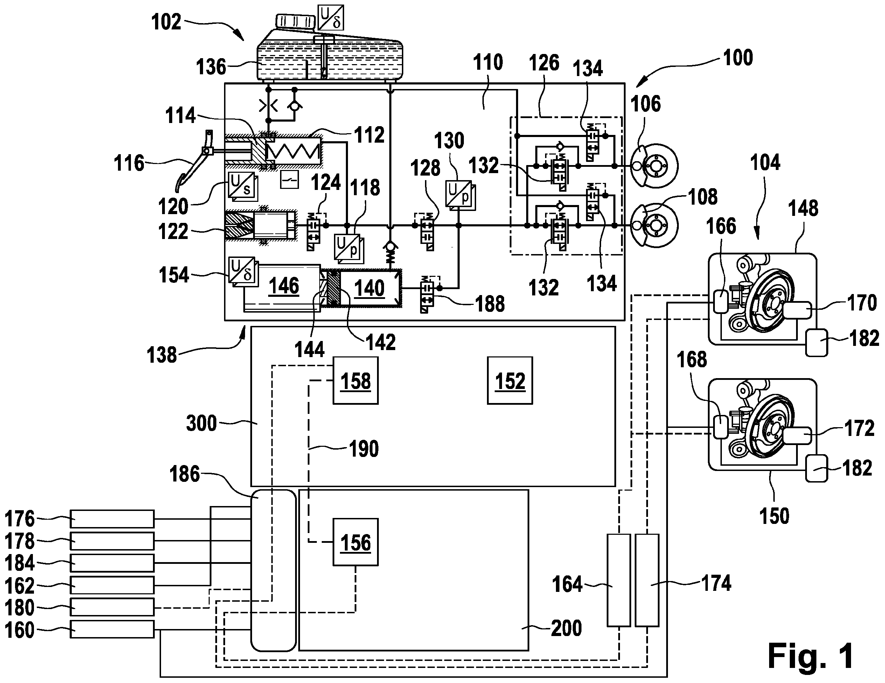

Die Figur 1 zeigt ein Bremssystem 100 für ein Kraftfahrzeug mit einem hydraulischen Teilbremssystem 102 und einem elektromechanischen Teilbremssystem 104. Das elektrohydraulische Teilbremssystem 102 weist dabei hydraulisch betätigte Radbremsen 106 und 108 auf, die auf die Vorderräder eines Kraftfahrzeugs wirken. Bei den Radbremsen 106 und 108 kann es sich insbesondere um hydraulisch betätigte Scheibenbremsen handeln. Die Radbremsen 106 und 108 werden dabei im Wirkbetrieb des Bremssystems 100 durch eine Hydraulikanordnung 110 mit einem hydraulischen Bremsdruck beaufschlagt, der durch die Radbremsen 106 und 108 in eine auf die die jeweils den Radbremsen 106 und 108 zugeordneten Fahrzeugräder wirkende Bremskraft übersetzt wird.

Hierzu weist die Hydraulikanordnung 110 einen Hauptzylinder 112 mit einem in dem Hauptzylinder 112 verschiebbar gelagerten Zylinderkolben 114 auf. Der Zylinderkolben 114 kann dabei durch Betätigung eines mit dem Zylinderkolben 114 verbundenen Betätigungspedals 116 in dem Hauptzylinder 112 verschoben werden, bzw. eine in dem Hauptzylinder 112 befindliche Bremsflüssigkeit kann mit einem hydraulischen Druck beaufschlagt werden. Der hierbei erzeugte hydraulische Druck wird durch einen Drucksensor 118 erfasst. Ferner wird durch einen Wegsensor 120 der Verschiebeweg des Zylinderkolbens 114 ermittelt.

Der Hauptzylinder 112 ist hydraulisch zunächst mit einem Pedalgefühlsimulator 122 verbunden, wobei zwischen Hauptzylinder 112 und Pedalgefühlsimulator 122 ein stromlos geschlossenes Simulatorventil 124 angeordnet ist. Durch das Simulatorventil 124 kann demnach eine hydraulische Verbindung zwischen dem Hauptzylinder 112 und dem Pedalgefühlsimulator 122 hergestellt oder unterbrochen werden.

Weiter ist der Hauptzylinder 112 hydraulisch mit einer Druckmodulationsvorrichtung 126 hydraulisch verbunden, wobei die Druckmodulationsvorrichtung 126 wiederum hydraulisch mit den Radbremsen 106 und 108 verbunden ist. Dabei ist zwischen dem Hauptzylinder 112 und der Druckmodulationsvorrichtung 126 ein stromlos offenes Hauptzylinderventil 128 angeordnet, wobei durch das Hauptzylinderventil 128 eine hydraulische Verbindung zwischen dem Hauptzylinder 112 und der Druckmodulationsvorrichtung 126 hergestellt oder unterbrochen werden kann. Zwischen dem Hauptzylinderventil 128 und der Druckmodulationsvorrichtung 126 ist ferner ein Vordrucksensor 130 angeordnet, wobei der Vordrucksensor 130 dazu ausgebildet ist, einen vor der Druckmodulationsvorrichtung 126 anliegenden hydraulischen Druck zu ermitteln.

Die Druckmodulationsvorrichtung 126 weist je verbundener hydraulisch betätigter Radbremse 106 und 108 ein stromlos offenes Einlassventil 132 und ein stromlos geschlossenes Auslassventil 134 auf. Die Auslassventile 134 sind dabei dazu ausgebildet, eine hydraulische Verbindung zwischen den Radbremsen 106 und 108 und einem Bremsflüssigkeitsreservoir 136 herzustellen oder zu unterbrechen, sodass ein in den Radbremsen 106 und 108 anliegender hydraulischer Bremsdruck über die Auslassventile 134 reduziert werden kann. Gleichzeitig kann durch gezieltes Öffnen und Schließen der Einlassventile 132 der in den Radbremsen 106 und 108 anliegende hydraulische Bremsdruck ausgehend von dem anliegenden Vordruck moduliert werden.

Die Hydraulikanordnung 110 weist ferner eine elektromechanische Druckbereitstellungseinrichtung 138 auf. Die Druckbereitstellungseinrichtung 138 weist dabei einen Hydraulikzylinder 140 und einen in dem Hydraulikzylinder 140 verschiebbaren Druckkolben 142 auf. Der Druckkolben 142 ist mit einem elektromotorisch angetriebenen Spindeltrieb 144 so verbunden, dass eine Rotation einer Antriebswelle des mit dem Spindeltrieb 144 verbundenen Antriebs bzw. Elektromotors 146 in eine Translation des Druckkolbens 142 in dem Hydraulikzylinder 140 übersetzt wird, wodurch eine in dem Hydraulikzylinder befindliche Bremsflüssigkeit mit einem Druck beaufschlagt werden kann. Die Rotationsposition eines Rotors des Elektromotors 146 und mithin die aktuelle Lage des Druckkolbens 142 in dem Hydraulikzylinder wird durch einen Motorpositionssensor 154 überwacht.

Der Hydraulikzylinder 140 der Druckbereitstellungseinrichtung 138 ist dabei ebenfalls mit der Druckmodulationsvorrichtung 126 hydraulisch verbunden, wobei zwischen der Druckmodulationsvorrichtung 126 und dem Hydraulikzylinder 140 der Druckbereitstellungseinrichtung 138 ein stromlos geschlossenes Druckzufuhrventil 188 angeordnet ist. Durch das Druckzufuhrventil 188 kann demnach eine hydraulische Verbindung zwischen der Druckbereitstellungseinrichtung 138 und der Druckmodulationsvorrichtung 126 hergestellt oder unterbrochen werden.

Das elektromechanische Teilbremssystem 104 weist in der dargestellten Ausgestaltung zwei elektromechanisch betätigte Radbremsen 148 und 150 auf, die als elektromechanische Trommelbremsen ausgestaltet sind. Die Radbremsen 148 und 150 sind dabei den Fahrzeugrädern der Hinterachse des Fahrzeugs zugeordnet. Ferner sind die Radbremsen 148 und 150 dazu ausgebildet, eine Parkbremsfunktion umzusetzen.

Das Bremssystem 100 weist zwei Steuereinheiten 200 und 300 auf, wobei die Steuereinheiten 200 und 300 in der dargestellten Ausführungsform als Teil des elektrohydraulischen Teilbremssystems 102 ausgebildet sind. Dabei ist eine erste Steuereinheit 200 dazu ausgebildet, die Druckmodulationsvorrichtung 126, also insbesondere die Einlassventile 132 und die Auslassventile 134 zu steuern um den an den Radbremsen 106 und 108 anliegenden hydraulischen Bremsdruck ausgehend von einem vor der Druckmodulationsvorrichtung 126 anliegenden hydraulischen Vordruck zu modulieren. Auf diese Weise kann durch die erste Steuereinheit 200 insbesondere eine ABS-Regelung oder eine ESC-Regelung implementiert werden. Ferner ist die erste Steuereinheit 200 dazu ausgebildet, einen durch den Vordrucksensor 130 ermittelten hydraulischen Druck auszulesen.

Die zweite Steuereinheit 300 ist dabei zu Steuerung der Druckbereitstellungseinrichtung 138, des Simulatorventils 124, des Hauptzylinderventils 128 und des Druckzufuhrventils 188 ausgebildet. Ferner weist die zweite Steuereinheit 300 eine Leistungselektronik 152 zur Bereitstellung und Steuerung einer Betriebsspannung für die elektromechanische Druckbereitstellungseinrichtung 138 bzw. den entsprechenden Elektromotor 146 auf. Die zweite Steuereinheit 300 ist dazu ausgebildet, einen durch den Wegsensor 120 ermittelten Verschiebeweg des Zylinderkolbens 114, einen durch den Drucksensor 118 ermittelten, durch den Hauptzylinder 112 erzeugten Druck und eine durch den Motorpositionssensor 154 erfasste Motorposition des Elektromotors 146 auszulesen.

Die erste Steuereinheit 200 weist einen ersten Mikrocontroller 156 auf, während die zweite Steuereinheit 300 einen zweiten Mikrocontroller 158 zur Umsetzung der Steuerungsfunktionen der jeweiligen Steuereinheit 200 bzw. 300 aufweist. Die Mikrocontroller 156 und 158 sind dabei über eine Kommunikationsverbindung 190 miteinander verbunden, sodass Steuerinformationen zwischen den Mikrocontrollern 156 und 158 und mithin zwischen den Steuereinheiten 200 und 300 ausgetauscht werden können.

Zur Steuerung der elektromechanisch betätigten Radbremsen 148 und 150 ist die erste Steuereinheit 200 über einen gemeinsamen primären Kommunikationsbus 164 mit den elektromechanisch betätigten Radbremsen 148 und 150 bzw. den in den elektromechanisch betätigten Radbremsen 148 und 150 enthaltenen Steuereinheiten 166 und 168 verbunden. Die erste Steuereinheit 200 ist dabei dazu ausgebildet, über diesen primären Kommunikationsbus 164 Steuerinformationen, insbesondere durch die Radbremsen 148 und 150 aufzubringende Soll-Bremskräfte an die Steuereinheiten 166 und 168 zu übermitteln. Die Steuereinheiten 166 und 168 sind dann dazu ausgebildet, die jeweilige Radbremse 148 bzw. 150 unter Zuhilfenahme von in den Radbremsen angeordneten Drehmomentsensoren 170 und 172 die Bremskraft der jeweiligen Radbremse 148 oder 150 auf die entsprechende Soll-Bremskraft einzuregeln.

Die zweite Steuereinheit 300 ist über einen gemeinsamen sekundären Kommunikationsbus 174 ebenfalls mit den elektromechanisch betätigten Radbremsen 148 und 150 verbunden und dazu ausgebildet, in einer Rückfallbetriebsart Steuerinformationen an die Steuereinheiten 166 und 168 der elektromechanisch betätigten Radbremsen 148 und 150 zu übermitteln. Hierauf wird im Folgenden noch eingegangen.

Das dargestellte Bremssystem weist ferner eine erste Energieversorgung 160 und eine zweite Energieversorgung 162 auf. Die erste Energieversorgung 160 ist dabei vollständig unabhängig von der zweiten Energieversorgung 162. Insbesondere kann es sich bei der ersten Energieversorgung 160 und der zweiten Energieversorgung 162 um zwei voneinander getrennte Bordnetze handeln, die insbesondere so ausgestaltet sind, dass ein Ausfall oder eine Fehlfunktion eines der Bordnetze nicht die Funktionsfähigkeit des jeweils anderen Bordnetzes beeinflusst.

Die erste Energieversorgung 160 ist dabei dazu ausgebildet, die erste Steuereinheit 200 und die elektromechanisch betätigten Radbremsen 148 und 150 mit Energie zu versorgen, während die zweite Energieversorgung 162 dazu ausgebildet ist, die zweite Steuereinheit 300 und mithin über die Leistungselektronik 152 auch die elektromechanische Druckbereitstellungseinrichtung 138 mit Energie zu versorgen.

Die erste Steuereinheit 200 ist dabei ferner mit einem Parkbremsschalter 176 verbunden, sodass bei Betätigten des Parkbremsschalters 176 eine entsprechende Information durch die erste Steuereinheit 200 verarbeitet werden kann. Die erste Steuereinheit 200 ist dann dazu ausgebildet, eine entsprechende Steuerinformation zur Aktivierung der Parkbremsfunktion an die elektromechanischen Radbremsen 148 und 150 über den primären Kommunikationsbus 164 zu übermitteln, sodass durch die Steuereinheiten 166 und 168 der Radbremsen 148 und 150 die Parkbremsfunktion aktiviert wird.

Die erste Steuereinheit 200 ist zudem mit einem ESC-Schalter 178 verbunden, mit dem die ESC-Funktionalität des Bremssystems 100 aktiviert oder deaktiviert werden kann. Ferner ist die erste Steuereinheit 200 mit einem Fahrzeugbus 180 verbunden, wobei über den Fahrzeugbus 180 ebenfalls Steuerinformationen, insbesondere in Form von Bremsanforderungen empfangen werden können. Derartige Bremsanforderungen können beispielsweise im Rahmen einer automatisierten Fahrfunktion, beispielsweise eines Autopiloten, ausgelöst werden.

Zur Bereitstellung Regelungsfunktionen wie ABS und ESC durch die erste Steuereinheit 200 weist das Bremssystem 100 ferner Raddrehzahlsensoren 182 auf, die denjenigen Fahrzeugrädern zugeordnet sind, die durch eine der Radbremsen 106, 108, 148 oder 150 mit einer Bremskraft beaufschlagt werden können. Dabei werden Raddrehzahlinformationen derjenigen Fahrzeugräder, denen die hydraulisch betätigten Radbremsen 106 und 108 zugeordnet sind, über eine entsprechende Schnittstelle 184 an die erste Steuereinheit 200 übermittelt, während die Raddrehzahlinformationen derjenigen Fahrzeugräder, denen die elektromechanisch betätigten Radbremsen 148 und 150 zugeordnet sind, über den primären Kommunikationsbus 164 an die erste Steuereinheit 200 übermittelt werden.

Die Anbindung der ersten Energieversorgung 160, der zweiten Energieversorgung 162, der Raddrehzahlsensoren 182 der Vorderräder, des Parkbremsschalters 176, des ESC-Schalters 178, des Fahrzeugbusses 180, des primären Kommunikationsbus 164 und des sekundären Kommunikationsbus 174 an die Steuereinheiten 200 und 300 des Bremssystems 100 ist dabei über eine gemeinsame Schnittstelle 186 realisiert, die insbesondere als Teil der ersten Steuereinheit 200 ausgeführt sein kann.

Im Folgenden wird die Funktionsweise des Bremssystems 100 beschrieben. In einer Normalbetriebsart des Bremssystems 100 ist dabei vorgesehen, dass der Hauptzylinder 112 von den hydraulisch betätigten Radbremsen 106 und 108 durch ein geschlossenes Hauptzylinderventil 128 entkoppelt ist, sodass ein durch Betätigung des Betätigungspedals 116 aufgebauter hydraulischer Druck durch den Pedalgefühlsimulator 122 aufgenommen wird. Hierzu ist das Simulatorventil 124 in der Normalbetriebsart geöffnet. Der dabei erzeugte Druck wird durch den Drucksensor 118 erfasst, während gleichzeitig der Verschiebeweg des Zylinderkolbens 114 durch den Wegsensor 120 erfasst wird. Ferner können als Betätigungsinformationen auch ein Betätigungsweg oder ein Betätigungswinkel des Betätigungspedals oder eine auf das Betätigungspedal 116 wirkende Betätigungskraft ermittelt werden.

Die so erfassten Betätigungsinformationen werden durch die zweite Steuereinheit 300 ausgelesen und als Bremswunsch interpretiert. Auf Grundlage dieses Bremswunsches steuert die zweite Steuereinheit 300 mittels der Leistungselektronik 152 die Druckbereitstellungseinrichtung 138 so an, dass ein dem Bremswunsch entsprechender hydraulischer Bremsdruck in dem Hydraulikzylinder 140 der Druckbereitstellungseinrichtung 138 und mithin in den Radbremsen 106 und 108 erzeugt wird, sodass die gewünschte Bremskraft durch die Radbremsen 106 und 108 erzeugt wird. Dieser Bremsdruck wird durch den Vordrucksensor 128 erfasst und durch die erste Steuereinheit 200 ausgelesen.

Die erste Steuereinheit 200 ist dabei dazu ausgebildet auf Grundlage des ermittelten Bremsdrucks und/oder auf Grundlage von Betätigungsinformationen, die von der zweiten Steuereinheit 300 an die erste Steuereinheit 200 übermittelt werden, eine Soll-Bremskraft zu ermitteln, die durch die elektromechanisch betätigten Radbremsen 148 und 150 zur Umsetzung des Bremswunsches aufzubringen ist. Hierbei kann eine feste oder dynamisch veränderliche Bremskraftverteilung zwischen den Radbremsen 106 und 108 der Vorderachse und den Radbremsen 148 und 150 der Hinterachse berücksichtigt werden.

Die so ermittelte Soll-Bremskraft wird dann von der ersten Steuereinheit 200 über den primären Kommunikationsbus 164 an die Steuereinheiten 166 und 168 der Radbremsen 148 und 150 übermittelt, woraufhin die Steuereinheiten 166 und 168 die durch die Radbremsen 148 und 150 aufgebrachte Bremskraft entsprechend einregeln.

**In** hierzu analoger Weise kann auch ein Bremswunsch bzw. eine Bremsanforderung umgesetzt werden, der über den Fahrzeugbus 180 empfangen wurde.

Dabei werden während des Verzögerungsvorgangs permanent durch die erste Steuereinheit 200 die Raddrehzahlen der Fahrzeugräder dahingehend überwacht, ob der Schlupf wenigstens eines der Fahrzeugräder einen bestimmten Grenzwert überschreitet. Ist die an einem Fahrzeugrad der Hinterachse der Fall, wird durch die erste Steuereinheit 200 die Soll-Bremskraft der entsprechenden Radbremse 148 oder 150 angepasst, sodass der Schlupf wieder auf ein zulässiges Maß eingeregelt wird. Bei erkanntem Schlupf an einem Fahrzeugrad der Vorderachse steuert die erste Steuereinheit 200 die Druckmodulationsvorrichtung 126 so an, dass bspw. durch zeitlich begrenztes Öffnen der entsprechenden Auslassventile 134 der Bremsdruck in den entsprechenden Radbremsen 106 oder 108 kurzzeitig so reduziert, dass der Schlupf wieder zu einem zulässigen Wert zurückkehrt.

Ferner kann durch die erste Steuereinheit 200 auch ein gezieltes Einbremsen einzelner Fahrzeugräder infolge einer Regelanforderung einer ESC-Regelung in der beschriebenen Art und Weise ausgelöst werden.

In dem beschriebenen Bremssystem 100 können durch eine Vielzahl elektrischer Fehler Teile des Bremssystems 100 nicht mehr in dem gewünschten Maß genutzt werden. Im Folgenden werden vier beispielhafte Fälle solcher Fehler beschrieben.

In einem ersten Szenario kann die erste Steuereinheit 200 aufgrund eines elektrischen Defekts ausfallen. In diesem Fall ist eine radindividuelle Modulation der Bremskräfte nicht mehr in dem zuvor beschriebenen Maß möglich. Ein solcher Fehler kann dem Fahrzeugführer durch Aufleuchten einer entsprechenden Warnlampe signalisiert werden.

Das hydraulische Teilbremssystem 102 kann jedoch, abgesehen von einer Modulation der an den einzelnen Radbremsen 106 bzw. 108 anliegenden Bremsdrücke, weiterhin normal betrieben werden, sodass auch weiterhin eine elektrische Verstärkung der Bremskraft möglich ist. Die elektromechanischen Radbremsen 148 und 150 der Hinterachse können in diesem Fall durch die zweite Steuereinheit 300 weiterhin angesteuert werden. Hierzu ist vorgesehen, dass die zweite Steuereinheit 300 bei Ausfall der ersten Steuereinheit 200 die ermittelten Betätigungsinformationen über den sekundären Kommunikationsbus 174 an die Steuereinheiten 166 und 168 übermittelt. Die Steuereinheiten 166 und 168 sind dann dazu ausgebildet, auf Grundlage dieser Betätigungsinformationen lokal die Bremskraft der entsprechenden Radbremse 148 bzw. 150 einzuregeln. Dabei kann ferner vorgesehen sein, dass die Radbremsen 148 und 150 untereinander die jeweils ermittelten Raddrehzahlen austauschen, sodass eine lokale Steuerung des Radschlupfs möglich bleibt.

In einem zweiten Szenario kann die zweite Steuereinheit 300 aufgrund eines technischen Defekts ausfallen, sodass eine elektrische Verstärkung des hydraulischen Bremsdrucks durch die Druckbereitstellungseinrichtung 138 nicht mehr möglich ist. Dabei werden das Simulatorventil 124 und das Druckzufuhrventil 188 automatisch geschlossen, während das Hauptzylinderventil 128 öffnet. Folglich ist in diesem Fall der Hauptzylinder 112 direkt mit den Radbremsen 106 und 108 verbunden, sodass eine auf das Betätigungspedal 116 wirkende Betätigungskraft direkt in einen an den Radbremsen 106 und 108 anliegenden Bremsdruck übersetzt wird. Dieser Bremsdruck wird weiterhin mittels des Vordrucksensors 130 erfasst, woraufhin die erste Steuereinheit 200 die elektromechanisch betätigten Radbremsen 148 und 150 entsprechend ansteuert. Dabei kann ferner vorgesehen sein, dass die erste Steuereinheit 200 auch weiterhin Zugriff auf die Betätigungsinformationen des Betätigungspedals 116 und/oder des Hauptzylinders 112 hat. Folglich ist in dieser Rückfallbetriebsart zwar keine elektrische Verstärkung der Bremskraft an den Radbremsen 106 und 108 der Vorderräder mehr möglich. Jedoch kann die Hinterachse des Fahrzeugs weiterhin mit der maximal möglichen Bremskraft beaufschlagt werden, sodass weiterhin eine ausreichende Verzögerung des Fahrzeugs möglich bleibt.

Ein hierzu analoges Szenario ergibt sich bei Ausfall der zweiten Energieversorgung 162.

Bei Ausfall der ersten Energieversorgung 160 ist hingegen eine Nutzung der Radbremsen 148 und 150 der Hinterachse nicht mehr möglich. Allerdings können in diesem Fall die Radbremsen 106 und 108 der Vorderachse weiterhin mit elektrischer Verstärkung der Bremskraft betrieben werden, sodass auch hier weiterhin eine ausreichend starke Verzögerung des Fahrzeugs erreicht werden kann.

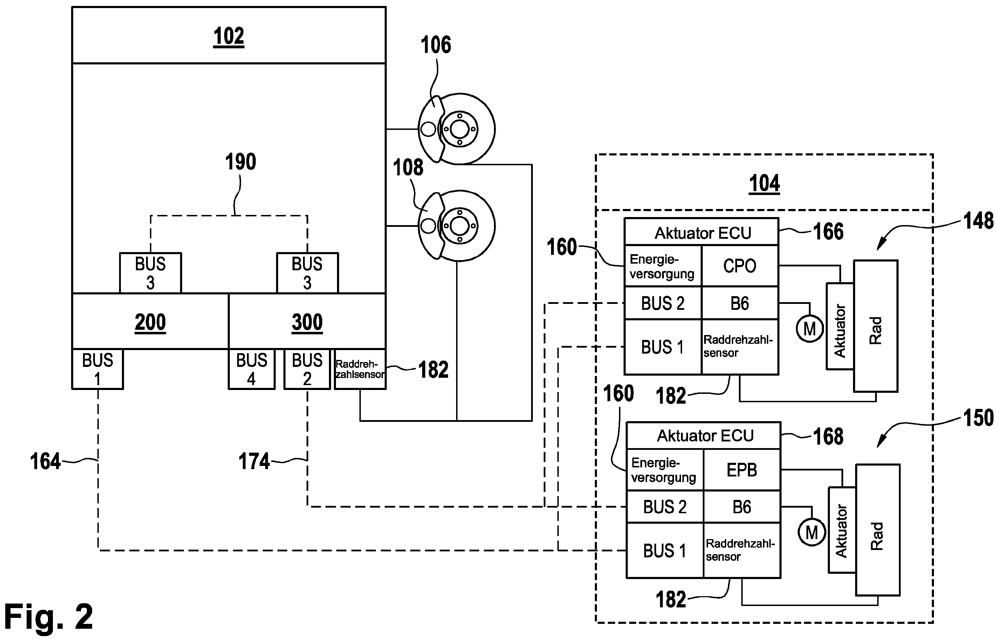

Die Figur 2 zeigt nochmals eine vereinfachte Darstellung des in Figur 1 gezeigten Bremssystems 100.

## Patentansprüche

1. Bremssystem (100) für ein Kraftfahrzeug mit einem elektrohydraulischen Teilbremssystem mit hydraulisch betätigten Radbremsen (106, 108) und einem elektromechanischen Teilbremssystem mit elektromechanisch betätigten Radbremsen (148, 150),
wobei das Bremssystem zwei Steuereinheiten (200, 300) und zwei voneinander unabhängige Energieversorgungen (160, 162) aufweist, wobei eine erste der Steuereinheiten (200) zur Steuerung des elektromechanischen Teilbremssystems ausgebildet ist und eine zweite der Steuereinheiten (300) zur Steuerung des elektrohydraulischen Teilbremssystems ausgebildet ist,
wobei die erste Steuereinheit (200) ausschließlich durch eine erste der Energieversorgungen (160) mit Energie versorgt wird und wobei die zweite Steuereinheit (300) ausschließlich durch eine zweite der Energieversorgungen (162) mit Energie versorgt wird,
wobei die erste Steuereinheit (200) über einen primären Kommunikationsbus (164) mit den elektromechanisch betätigten Radbremsen (148, 150) verbunden ist und wobei die zweite Steuereinheit (300) über einen sekundären Kommunikationsbus (174) mit den elektromechanisch betätigten Radbremsen (148, 150) verbunden ist,
wobei die erste Steuereinheit (200) dazu ausgebildet ist, Steuerinformationen über den primären Kommunikationsbus (164) an die elektromechanisch betätigten Radbremsen (148, 150) zu übermitteln, wobei die zweite Steuereinheit (300) dazu ausgebildet ist, über den sekundären Kommunikationsbus (174) Betätigungsinformationen des elektrohydraulischen Teilbremssystems an die elektromechanisch betätigten Radbremsen (148, 150) zu übermitteln,
wobei die elektromechanischen Radbremsen (148, 150) jeweils Radsteuereinheiten (166, 168) aufweisen, wobei die Radsteuereinheiten (166, 168) dazu ausgebildet sind, eine durch die jeweilige elektromechanische Radbremse (148, 150) aufgebrachte Bremskraft in Abhängigkeit einer über den primären (164) und/oder sekundären Kommunikationsbus (174) empfangenen Information zu steuern.

2. Bremssystem (100) nach Anspruch 1, **dadurch gekennzeichnet, dass** das elektrohydraulische Teilbremssystem eine elektromechanische Druckbereitstellungseinrichtung (138) zur Erzeugung eines hydraulischen Bremsdrucks aufweist, wobei die zweite Steuereinheit (300) dazu ausgebildet ist, die elektromechanische Druckbereitstellungseinrichtung (138) zu Erzeugung eines hydraulischen Bremsdrucks durch die elektromechanische Druckbereitstellungseinrichtung (138) anzusteuern.

3. Bremssystem (100) nach Anspruch 2, wobei das elektrohydraulische Teilbremssystem ein Druckzufuhrventil (188) aufweist, wobei das Druckzufuhrventil (188) dazu ausgebildet ist, eine hydraulische Verbindung zwischen der elektromechanischen Druckbereitstellungseinrichtung (138) und den hydraulisch betätigten Radbremsen (106, 108) herzustellen oder zu trennen.

4. Bremssystem (100) nach einem der Ansprüche 2 oder 3, **dadurch gekennzeichnet, dass** das elektrohydraulische Teilbremssystem einen hydraulischen Hauptzylinder (112) aufweist, wobei der Hauptzylinder (112) durch ein Betätigungspedal (116) mit einem hydraulischen Druck beaufschlagt werden kann, wobei das elektrohydraulische Teilbremssystem ein Hauptzylinderventil (128) aufweist, wobei das Hauptzylinderventil (128) dazu ausgebildet ist, eine hydraulische Verbindung zwischen dem Hauptzylinder (112) und den hydraulisch betätigten Radbremsen (106, 108) herzustellen oder zu trennen.

5. Bremssystem (100) nach Anspruch 4, **dadurch gekennzeichnet, dass** das elektrohydraulische Teilbremssystem einen Pedalgefühlsimulator (122) aufweist, wobei der Pedalgefühlsimulator (122) mit dem Hauptzylinder (112) hydraulisch verbindbar ist, wobei das elektrohydraulische Teilbremssystem ein Simulatorventil (122) aufweist, wobei das Simulatorventil (122) dazu ausgebildet ist, eine hydraulische Verbindung zwischen dem Hauptzylinder (112) und dem Pedalgefühlsimulator (122) herzustellen oder zu trennen.

6. Bremssystem (100) nach den Ansprüchen 3 und 5, **dadurch gekennzeichnet, dass** die zweite Steuereinheit (300) dazu ausgebildet ist, die elektromechanische Druckbereitstellungseinrichtung (138), das Simulatorventil (124), das Hauptzylinderventil (128) und das Druckzufuhrventil (188) zu steuern.

7. Bremssystem (100) nach einem der Ansprüche 2 bis 6, **dadurch gekennzeichnet, dass** das elektrohydraulische Teilbremssystem einen ersten Drucksensor (118) zur Bestimmung eines durch den Hauptzylinder (112) erzeugten hydraulischen Drucks und/oder einen Motorpositionssensor (154) zur Bestimmung einer Motorlage eines Antriebs (146) der elektromechanischen Druckbereitstellungseinrichtung (138) und/oder einen Wegsensor (120) zur Bestimmung eines Verschiebeweges eines Zylinderkolbens (114) in dem Hauptzylinder (112) aufweist.

8. Bremssystem (100) nach einem der vorherigen Ansprüche 2 bis 7, **dadurch gekennzeichnet, dass** die zweite Steuereinheit (300) dazu ausgebildet ist, die elektromechanische Druckbereitstellungseinrichtung (138) zur Erzeugung eines hydraulischen Bremsdrucks durch die elektromechanische Druckbereitstellungseinrichtung (138) in Abhängigkeit eines ermittelten Verschiebewegs des Zylinderkolbens (114) in dem Hauptzylinder (112) und/oder in Abhängigkeit eines durch den Hauptzylinder (112) erzeugten hydraulischen Drucks und/oder in Abhängigkeit eines Betätigungswinkels des Betätigungspedals (116) und/oder in Abhängigkeit eines Betätigungswegs des Betätigungspedals (116) und/oder in Abhängigkeit einer auf das Betätigungspedal (116) wirkenden Kraft anzusteuern.

9. Bremssystem (100) nach einem der vorherigen Ansprüche, **dadurch gekennzeichnet, dass** das elektrohydraulische Teilbremssystem eine Druckmodulationsvorrichtung (126) aufweist, wobei die Druckmodulationsvorrichtung (126) dazu ausgebildet ist, den an den hydraulisch betätigten Radbremsen (106, 108) anliegenden hydraulischen Bremsdruck insbesondere radindividuell zu modulieren, wobei die erste Steuereinheit (200) dazu ausgebildet ist, die Druckmodulationsvorrichtung (126) zu steuern.

10. Bremssystem (100) nach einem der vorherigen Ansprüche, **dadurch gekennzeichnet, dass** die elektromechanisch betätigten Radbremsen (148, 150) von der ersten Energieversorgung (160) mit Energie versorgt werden.

11. Bremssystem (100) nach einem der vorherigen Ansprüche, **dadurch gekennzeichnet, dass** die erste Steuereinheit (200) dazu ausgebildet ist, in Abhängigkeit eines ermittelten Verschiebewegs des Zylinderkolbens (114) in dem Hauptzylinder (112) und/oder in Abhängigkeit eines durch den Hauptzylinder (112) erzeugten hydraulischen Drucks und/oder in Abhängigkeit eines Betätigungswinkels des Betätigungspedals (116) und/oder in Abhängigkeit eines Betätigungswegs des Betätigungspedals (116) und/oder in Abhängigkeit einer auf das Betätigungspedal (116) wirkenden Kraft durch die elektromechanisch betätigten Radbremsen (148, 150) aufzubringende Soll-Bremskräfte zu ermitteln.

12. Bremssystem (100) nach einem der vorherigen Ansprüche, **dadurch gekennzeichnet, dass** das Bremssystem (100) Raddrehzahlsensoren (182) aufweist, wobei die erste Steuereinheit (200) dazu ausgebildet ist, auf Grundlage der Raddrehzahlen die an den Fahrzeugrädern anliegenden Bremskräfte zu modulieren.

13. Bremssystem (100) nach einem der vorherigen Ansprüche, **dadurch gekennzeichnet, dass** die erste Steuereinheit (200) mit einem Fahrzeugbus (180) des Kraftfahrzeugs verbunden ist, wobei über den Fahrzeugbus (180) Steuerbefehle, insbesondere Bremsanforderungen, an die erste Steuereinheit (200) übermittelt werden können.

## Claims

1. A brake system (100) for a motor vehicle having an electrohydraulic partial brake system having hydraulically actuated wheel brakes (106, 108) and having an electromechanical partial brake system having electromechanically actuated wheel brakes (148, 150),
wherein the brake system has two control units (200, 300) and two mutually independent energy supplies (160, 162),
wherein a first of the control units (200) is designed for controlling the electromechanical partial brake system, and a second of the control units (300) is designed for controlling the electrohydraulic partial brake system,
wherein the first control unit (200) is supplied with energy exclusively by a first of the energy supplies (160) and wherein the second control unit (300) is supplied with energy exclusively by a second of the energy supplies (162),
wherein the first control unit (200) is connected to the electromechanically actuated wheel brakes (148, 150) via a primary communication bus (164), and wherein the second control unit (300) is connected to the electromechanically actuated wheel brakes (148, 150) via a secondary communication bus (174),
wherein the first control unit (200) is designed,
to transmit control information to the electromechanically actuated wheel brakes (148, 150) via the primary communication bus (164), wherein the second control unit (300) is designed to transmit actuation information of the electrohydraulic partial brake system to the electromechanically actuated wheel brakes (148, 150) via the secondary communication bus (174),
wherein the electromechanical wheel brakes (148, 150) each have wheel control units (166, 168), wherein the wheel control units (166, 168) are designed to control a braking force applied by the respective electromechanical wheel brake (148, 150) depending on information received via the primary (164) and/or secondary communication bus (174).

2. The brake system (100) as claimed in claim 1, **characterized in that** the electrohydraulic partial brake system has an electromechanical pressure provision device (138) for generating a hydraulic brake pressure, wherein the second control unit (300) is designed to actuate the electromechanical pressure provision device (138) to generate a hydraulic brake pressure by way of the electromechanical pressure provision device (138).

3. The brake system (100) as claimed in claim 2, wherein the electrohydraulic partial brake system has a pressure supply valve (188), wherein the pressure supply valve (188) is designed to establish or disconnect a hydraulic connection between the electromechanical pressure provision device (138) and the hydraulically actuated wheel brakes (106, 108).

4. The brake system (100) as claimed in either one of claims 2 or 3, **characterized in that** the electrohydraulic partial brake system has a hydraulic master cylinder (112), wherein the master cylinder (112) can be subjected to hydraulic pressure by an actuation pedal (116), wherein the electrohydraulic partial brake system has a master cylinder valve (128), wherein the master cylinder valve (128) is designed to establish or disconnect a hydraulic connection between the master cylinder (112) and the hydraulically actuated wheel brakes (106, 108).

5. The brake system (100) as claimed in claim 4, **characterized in that** the electrohydraulic partial brake system has a pedal feel simulator (122), wherein the pedal feel simulator (122) is hydraulically connectable to the master cylinder (112), wherein the electrohydraulic partial brake system has a simulator valve (122), wherein the simulator valve (122) is designed to establish or disconnect a hydraulic connection between the master cylinder (112) and the pedal feel simulator (122).

6. The brake system (100) as claimed in claims 3 and 5, **characterized in that** the second control unit (300) is designed to control the electromechanical pressure provision device (138), the simulator valve (124), the master cylinder valve (128), and the pressure supply valve (188).

7. The brake system (100) as claimed in any one of claims 2 to 6, **characterized in that** the electrohydraulic partial brake system has a first pressure sensor (118) for determining a hydraulic pressure generated by the master cylinder (112) and/or a motor position sensor (154) for determining a motor position of a drive (146) of the electromechanical pressure provision device (138) and/or a travel sensor (120) for determining a displacement travel of a cylinder piston (114) in the master cylinder (112).

8. The brake system (100) as claimed in any one of preceding claims 2 to 7, **characterized in that** the second control unit (300) is designed to actuate the electromechanical pressure provision device (138) to generate a hydraulic brake pressure by way of the electromechanical pressure provision device (138) depending on a determined displacement travel of the cylinder piston (114) in the master cylinder (112) and/or depending on a hydraulic pressure generated by the master cylinder (112) and/or depending on an actuation angle of the actuation pedal (116) and/or depending on an actuation travel of the actuation pedal (116) and/or depending on a force acting on the actuation pedal (116).

9. The brake system (100) as claimed in any one of the preceding claims, **characterized in that** the electrohydraulic partial brake system has a pressure modulation device (126), wherein the pressure modulation device (126) is designed to modulate, in particular in a wheel-specific manner, the hydraulic brake pressure applied at the hydraulically actuated wheel brakes (106, 108), wherein the first control unit (200) is designed to control the pressure modulation device (126).

10. The brake system (100) as claimed in any one of the preceding claims, **characterized in that** the electromechanically actuated wheel brakes (148, 150) are supplied with energy by the first energy supply (160).

11. The brake system (100) as claimed in any one of the preceding claims, **characterized in that** the first control unit (200) is designed to determine target braking forces to be applied by the electromechanically actuated wheel brakes (148, 150) depending on a determined displacement travel of the cylinder piston (114) in the master cylinder (112) and/or depending on a hydraulic pressure generated by the master cylinder (112) and/or depending on an actuation angle of the actuation pedal (116) and/or depending on an actuation travel of the actuation pedal (116) and/or depending on a force acting on the actuation pedal (116).

12. The brake system (100) as claimed in any one of the preceding claims, **characterized in that** the brake system (100) has wheel speed sensors (182), wherein the first control unit (200) is designed to modulate the braking forces applied to the vehicle wheels on the basis of the wheel speeds.

13. The brake system (100) as claimed in any one of the preceding claims, **characterized in that** the first control unit (200) is connected to a vehicle bus (180) of the motor vehicle, wherein control commands, in particular braking requests, can be transmitted to the first control unit (200) via the vehicle bus (180).

## Revendications

1. Système de freinage (100) pour un véhicule automobile comprenant un système de freinage partiel électrohydraulique avec freins de roue à actionnement hydraulique (106, 108) et un système de freinage partiel électromécanique avec freins de roue à actionnement électromécanique (148, 150),
dans lequel le système de freinage comprend deux unités de commande (200, 300) et deux sources d'énergie indépendantes (160, 162),
dans lequel une première des unités de commande (200) est configurée pour commander le système de freinage partiel électromécanique et une seconde des unités de commande (300) est configurée pour commander le système de freinage partiel électrohydraulique,
dans lequel la première unité de commande (200) est alimentée en énergie exclusivement par une première source d'énergie (160) et dans lequel la seconde unité de commande (300) est alimentée en énergie exclusivement par une seconde source d'énergie (162),
dans lequel la première unité de commande (200) est connectée via un bus de communication principal (164) aux freins de roue à actionnement électromécanique (148, 150) et dans lequel la seconde unité de commande (300) est connectée via un bus de communication secondaire (174) aux freins de roue à actionnement électromécanique (148, 150),
dans lequel la première unité de commande (200) est configurée pour, transmettre des informations de commande via le bus de communication principal (164) aux freins de roue à actionnement électromécanique (148, 150), dans lequel la seconde unité de commande (300) est configurée pour transmettre, via le bus de communication secondaire (174), des informations d'actionnement du système de freinage partiel électrohydraulique aux freins de roue à actionnement électromécanique (148, 150),
dans lequel les freins de roue électromécaniques (148, 150) comprennent chacun une unité de commande de roue (166, 168), dans lequel les unités de commande de roue (166, 168) sont configurées pour commander la force de freinage appliquée par le frein de roue électromécanique respectif (148, 150) en fonction des informations reçues via le bus de communication principal (164) et/ou secondaire (174).

2. Système de freinage (100) selon la revendication 1, **caractérisé en ce que** le système de freinage partiel électrohydraulique comprend un dispositif de mise sous pression électromécanique (138) pour générer une pression de freinage hydraulique, dans lequel la seconde unité de commande (300) est configurée pour commander le dispositif de mise sous pression électromécanique (138) afin de générer une pression de freinage hydraulique par l'intermédiaire du dispositif de mise sous pression électromécanique (138).

3. Système de freinage (100) selon la revendication 2, dans lequel le système de freinage partiel électrohydraulique comprend une vanne d'alimentation en pression (188), dans lequel la vanne d'alimentation en pression (188) est configurée pour établir ou déconnecter une connexion hydraulique entre le dispositif de mise sous pression électromécanique (138) et les freins de roue à actionnement hydraulique (106, 108).

4. Système de freinage (100) selon l'une quelconque des revendications 2 ou 3, **caractérisé en ce que** le système de freinage partiel électrohydraulique comprend un maître-cylindre hydraulique (112), dans lequel le maître-cylindre (112) peut être pressurisé par une pression hydraulique au moyen d'une pédale d'actionnement (116), dans lequel le système de freinage partiel électrohydraulique comprend une vanne de maître-cylindre (128), dans lequel la vanne de maître-cylindre (128) est configurée pour établir ou déconnecter une connexion hydraulique entre le maître-cylindre (112) et les freins de roue à actionnement hydraulique (106, 108).

5. Système de freinage (100) selon la revendication **4, caractérisé en ce que** le système de freinage partiel électrohydraulique comprend un simulateur de sensation de pédale (122), dans lequel le simulateur de sensation de pédale (122) est connectable hydrauliquement au maître-cylindre (112), dans lequel le système de freinage partiel électrohydraulique comprend une vanne de simulation (122), dans lequel la vanne de simulation (122) est configurée pour établir ou déconnecter une connexion hydraulique entre le maître-cylindre (112) et le simulateur de sensation de pédale (122).

6. Système de freinage (100) selon les revendications 3 et 5, **caractérisé en ce que** la seconde unité de commande (300) est configurée pour commander le dispositif de mise sous pression électromécanique (138), la vanne de simulation (124), la vanne du maître-cylindre (128) et la vanne d'alimentation en pression (188).

7. Système de freinage (100) selon l'une des revendications 2 à 6, **caractérisé en ce que** le système de freinage partiel électrohydraulique comprend un premier capteur de pression (118) pour déterminer une pression hydraulique générée par le maître-cylindre (112) et/ou un capteur de position du moteur (154) pour déterminer la position du moteur d'un entraînement (146) du dispositif de mise sous pression électromécanique (138) et/ou un capteur de déplacement (120) pour déterminer la trajectoire de déplacement d'un piston de cylindre (114) dans le maître-cylindre (112).

8. Système de freinage (100) selon l'une quelconque des revendications 2 à 7 précédentes, **caractérisé en ce que** la seconde unité de commande (300) est configurée pour commander le dispositif de mise sous pression électromécanique (138) afin de générer une pression de freinage hydraulique à travers le dispositif de mise sous pression électromécanique (138) en fonction d'un déplacement déterminé du piston de cylindre (114) dans le maître-cylindre (112) et/ou en fonction d'une pression hydraulique générée par le maître-cylindre (112) et/ou en fonction d'un angle d'actionnement de la pédale d'actionnement (116) et/ou en fonction d'un déplacement d'actionnement de la pédale d'actionnement (116) et/ou en fonction d'une force agissant sur la pédale d'actionnement (116).

9. Système de freinage (100) selon l'une quelconque des revendications précédentes, **caractérisé en ce que** le système de freinage partiel électrohydraulique comprend un dispositif de modulation de pression (126), dans lequel le dispositif de modulation de pression (126) est configuré pour moduler la pression de freinage hydraulique appliquée aux freins de roue à actionnement hydraulique (106, 108), en particulier individuellement pour chaque roue, dans lequel la première unité de commande (200) est configurée pour commander le dispositif de modulation de pression (126).

10. Système de freinage (100) selon l'une quelconque des revendications précédentes, **caractérisé en ce que** les freins de roue à actionnement électromécanique (148, 150) sont alimentés en énergie par la première source d'énergie (160).

11. Système de freinage (100) selon l'une quelconque des revendications précédentes, **caractérisé en ce que** la première unité de commande (200) est configurée pour, en fonction d'un déplacement déterminé du piston du cylindre (114) dans le maître-cylindre (112) et/ou en fonction d'une pression hydraulique générée par le maître-cylindre (112) et/ou en fonction d'un angle d'actionnement de la pédale d'actionnement (116) et/ou en fonction d'un déplacement d'actionnement de la pédale d'actionnement (116) et/ou en fonction d'une force agissant sur la pédale d'actionnement (116) par les freins de roue à actionnement électromécanique (148, 150), déterminer des forces de freinage de consigne.

12. Système de freinage (100) selon l'une quelconque des revendications précédentes, **caractérisé en ce que** le système de freinage (100) comprend des capteurs de vitesse de roue (182), dans lequel la première unité de commande (200) est configurée pour moduler les forces de freinage appliquées aux roues du véhicule en fonction des vitesses de roue.

13. Système de freinage (100) selon l'une quelconque des revendications précédentes, **caractérisé en ce que** la première unité de commande (200) est connectée à un bus de véhicule (180) du véhicule automobile, dans lequel des ordres de commande, en particulier des demandes de freinage, peuvent être transmises à la première unité de commande (200) via le bus de véhicule (180).
